Europäisches Patentamt

European Patent Office

Office européen des brevets

(19)

(11) Veröffentlichungsnummer: **0 451 527 A1**

# (12) EUROPÄISCHE PATENTANMELDUNG

(21) Anmeldenummer: **91103865.1**

(22) Anmeldetag: **13.03.91**

(51) Int. Cl.⁵: **G21C 17/007, B25J 9/04**

(30) Priorität: **26.03.90 DE 9003515 U**

(43) Veröffentlichungstag der Anmeldung:
**16.10.91 Patentblatt 91/42**

(84) Benannte Vertragsstaaten:
**CH DE ES LI SE**

(71) Anmelder: **SIEMENS AKTIENGESELLSCHAFT**
**Wittelsbacherplatz 2**
**W-8000 München 2(DE)**

(72) Erfinder: **Dirauf, Franz, Dipl.-Ing. (FH)**
**Bamberger Strasse 20**
**W-8629 Ebensfeld(DE)**
Erfinder: **Gottfried, Roland, Dipl.-Ing. (FH)**
**Eggenweiherstrasse 24**
**W-8524 Neunkirchen(DE)**

(54) **Manipulator für Hantierungsarbeiten, insbesondere für zerstörungsfreie Prüfungen, und Verfahren zum Hantieren eines Gerätes.**

(57) Für Hantierungsarbeiten im Stutzenbereich eines Behälters des Primärkreises in einem Kernkraftwerk ist an einem Wagen, der in Umfangsrichtung des Stutzens (3) verfahren werden kann, ein in Achsrichtung des Stutzens (3) verschiebbarer Schlitten (9) angeordnet. Der Schlitten (9) trägt eine Halbschere (10), deren Oberarm (11) mit seinem einen Ende in einem am Schlitten (9) angeordneten Schultergelenk (12) gelagert ist. Das andere Ende des Oberarms (11) ist über ein Gelenk (13) mit einem Unterarm (14) verbunden, an dessen freiem Ende über ein weiteres Gelenk (15) ein Träger (16) für ein Werkzeug (18) oder einen Prüfkopf (17) angeordnet ist. Der Träger (16) für das Werkzeug (18) oder für den Prüfkopf (17) und das Gelenk (13) zwischen Oberarm (11) und Unterarm (14) werden mittels einer auf Antriebsmotoren (12a, 13a, 9a) wirkenden Steuereinrichtung (22) auf einer vorgegebenen Bahn gesteuert.

FIG 8

Die Erfindung bezieht sich auf einen Manipulator für Hantierungsarbeiten, insbesondere für zerstörungsfreie Prüfungen, im Stutzenbereich eines Behälters des Primärkreises in einem Kernkraftwerk. Ferner bezieht sich die Erfindung auf ein Verfahren zum Hantieren eines Gerätes, insbesondere eines Prüfkopfs.

Die Stutzen an den Behältern des Primärkreises gehören zu hochbeanspruchten Stellen eines Kernkraftwerkes. Aus diesem Grund müssen die Einschweißnähte und die Stutzen in den Kanten regelmäßig mit zerstörungsfreien Verfahren geprüft werden.

Es ist bekannt, derartige Prüfungen mit einem Manipulator durchzuführen, der einen zum Stutzen radialen Ausleger mit einem an diesem axial verschiebbaren Prüfkopf besitzt und auf einer Ringschiene, die den zu prüfenden Stutzen umgibt, aufgegleist wird. Um die erforderlichen Bewegungen bei den Prüfvorgängen auszuführen, verfügt der Maniupulator über je einen Antrieb in Umfangsrichtung und in Radialrichtung. Der Ausleger in Radialrichtung wird durch mechanische Einrichtungen an die zu prüfende Behälteraußenwand angedrückt und tangential ausgerichtet. Der Behälter mit dem zu prüfenden Stutzen ist von einem biologischen Schild und einer Isolierung umgeben. Da der Spalt zwischen dem Behälter und der Isolierung bzw. dem biologischen Schild teilweise sehr eng ist, ist das Einbringen des bekannten Manipulators in den Ringspalt sehr schwierig und nicht immer möglich, da die notwendige Bauhöhe des bekannten Auslegers den Einsatz bei sehr engem Ringspalt verbietet.

Bei der Prüfung muß der Prüfkopf auf konzentrischen oder elliptischen Bahnen um den Stutzen gefahren werden. Aufgrund von prüftechnischen Anforderungen ist es erforderlich, verschiedene Prüfköpfe zu verwenden, die im Verlauf einer Prüfung manuell ausgetauscht werden müssen. Die Prüfung wird erschwert durch die erhöhte Strahlung in der Nähe des Prüfobjektes sowie durch die beengten Raumverhältnisse. Der Prüfkopfwechsel erfordert bei den bekannten Vorrichtungen eine manuelle Demontage des Manipulators und ist deshalb mit hohem Zeitaufwand und erheblicher Strahlenbelastung des Personals verbunden. Darüber hinaus ist das Umfahren von Hindernissen im Prüfbereich nicht immer möglich, da der radiale Ausleger einen Grundrahmen mit einer sich über die gesamte Länge erstreckenden Spindel zum Bewegen des Prüfkopfes besitzt und dadurch sehr ausladend ist.

Der Erfindung liegt die Aufgabe zugrunde, einen Manipulator anzugeben, der leichter als bisher in den Ringspalt eingebracht werden kann und auch in sehr enge Ringspalten arbeiten kann. Darüber hinaus soll es der Manipulator ermöglichen, die Zeit für den Wechsel des Prüfkopfes zu verkürzen und die Strahlenbelastung für das Bedienungspersonal zu verringern.

Der Erfindung liegt ferner die Aufgabe zugrunde, ein Verfahren anzugeben, das ein fernbedientes Hantieren eines Gerätes mit einem Manipulator bei beengten Raumverhältnissen ermöglicht.

Die erstgenannte Aufgabe wird erfindungsgemäß durch einen Manipulator für Hantierungsarbeiten, insbesondere für zerstörungsfreie Prüfungen, im Stutzenbereich eines Behälters des Primärkreises in einem Kernkraftwerk gelöst, bei dem an einem in Umfangsrichtung des Stutzens verfahrbaren Wagen ein in Achsrichtung des Stutzens verschiebbarer Schlitten und an diesem eine Halbschere angeordnet ist, deren Oberarm mit seinem einen Ende in einem am Schlitten angeordneten Schultergelenk gelagert ist und an dem anderen Ende über ein Gelenk mit einem Unterarm verbunden ist, an dessen freiem Ende über ein weiteres Gelenk ein Träger für ein Werkzeug oder einen Prüfkopf angeordnet ist.

Auf diese Weise wird eine sehr schlanke Bauform erzielt, die es ermöglicht, den Manipulator in beengten Freiräumen einzusetzen und die vor allem auch eine gute Anpassung an die Krümmung des Ringspaltes im Stutzenbereich erlaubt. Hindernisse im Prüfbereich können durch Zurückziehen des Auslegers umfahren werden, da der Unterarm nicht nur geschwenkt, sondern auch in Achsrichtung des Stutzens verfahren werden kann. Ferner erlaubt der Manipulator sowohl das Abfahren der Prüfbereiche auf dem Behälter als auch sämtlicher Prüfbereiche auf dem Stutzenmantel. Die Arme des Manipulators können räumlich positioniert werden. Deshalb ist der Manipulator nicht nur für Prüfzwekke, sondern auch für Hantierungsaufgaben am Stutzen und im Ringspalt geeignet.

Zum Hantieren eines Gerätes, insbesondere eines Prüfkopfs, im Stutzenbereich eines Behälters des Primärkreises in einem Kernkraftwerk ist ein Verfahren mit einem Manipulator vorgesehen, der einen in Umfangsrichtung des Stutzens verfahrbaren Wagen und einen an diesem angeordneten, in Achsrichtung des Stutzens verschiebbaren Schlitten sowie eine an diesem gelagerte Halbschere besitzt, deren Oberarm mit seinem einen Ende in einem an dem Schlitten angeordneten Schultergelenk gelagert ist und an dem anderen Ende über ein Gelenk mit einem Unterarm verbunden ist, an dessen freiem Ende über ein weiteres Gelenk ein Träger für ein Werkzeug oder einen Prüfkopf angeordnet ist, wobei der Träger für das Werkzeug oder für den Prüfkopf und das Gelenk zwischen Oberarm und Unterarm mittels einer auf Antriebsmotoren wirkende Steuereinrichtung auf einer vorgegebenen Bahn gesteuert werden, und der Schwenkwinkel des Oberarms und/oder des Unterarms und gegebenenfalls die Position des Schlittens mittels der Antriebsmotoren verändert werden.

Vorteilhafte Weiterbildungen der Erfindung sind in den Unteransprüchen angegeben.

In der Zeichnung sind schematische Ausführungsbeispiele der Erfindung dargestellt. Darin zeigen:

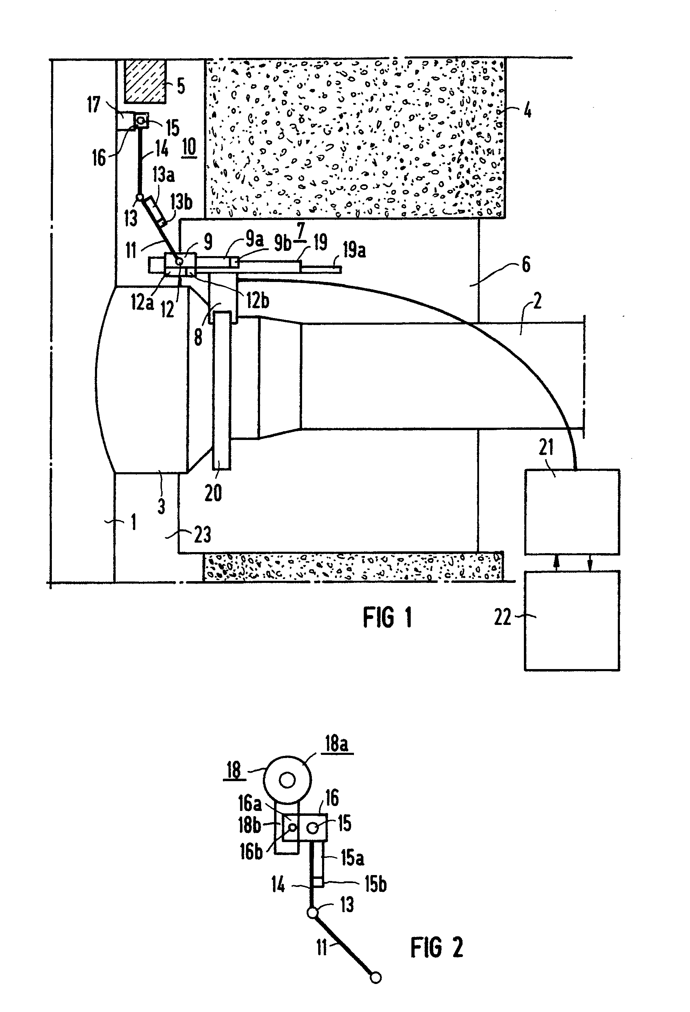

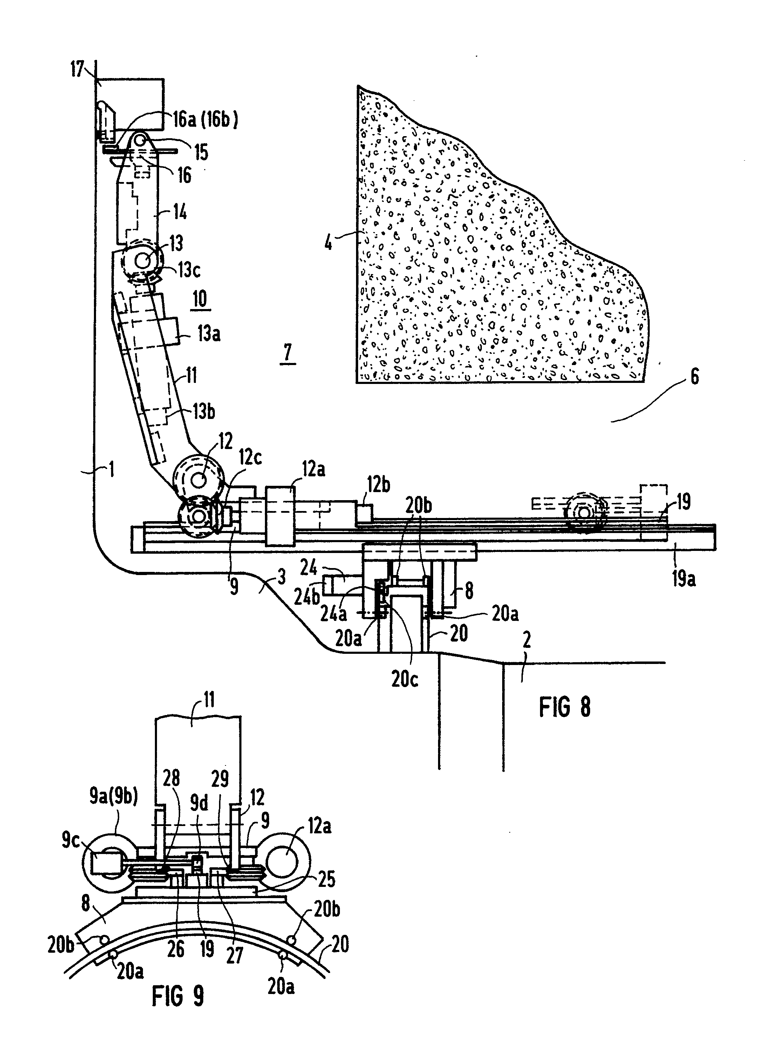

FIG 1
einen Teilschnitt eines Behälters und eine Prinzipdarstellung eines Manipulators zum Prüfen eines in den Behälter mündenden Rohrstutzens,
FIG 2
eine Halbschere des Manipulators gemäß FIG 1 mit einem an einem Halter angeordneten Werkzeug, das als Schneid- oder Trennwerkzeug ausgebildet ist,
FIG 3
den Manipulator gemäß FIG 1 in Montagestellung mit eingeklappten Armen,
FIG 4, 5 und 6
das Ausklappen und Einfahren der Arme,
FIG 7
das Einbringen des in FIG 1 gezeigten Manipulators in gestreckter Lage der Arme,
FIG 8
eine Ansicht eines Manipulators in detaillierter Darstellung und
FIG 9
eine Seitenansicht des in FIG 8 dargestellten Manipulators.

In dem in Figur 1 gezeigten Teilschnitt eines Behälters 1 ist eine Rohrleitung 2 zu sehen, die über einen Stutzen 3 in den Behälter 1 eingeführt ist. Der Behälter 1 ist von einem biologischen Schild 4 und einer Wärmeisolierung 5 umgeben. An der Einmündungsstelle der Rohrleitung hat der biologische Schild eine Öffnung 6, die rechteckförmig ausgebildet ist, aber auch rund sein kann. In dem zu prüfenden Bereich des Behälters 1 muß die Isolierung vor Aufnahme der Prüfarbeiten entfernt werden. Dies kann mittels des Manipulators 7 geschehen.

Der Manipulator 7 besitzt einen Wagen 8, der die Gestalt eines Kreissegments hat und in Umfangsrichtung des Stutzens 3 verfahrbar ist. An dem Wagen 8 ist ein Schlitten 9 in Achsrichtung des Stutzens 3 verschiebbar. An dem Schlitten 9 ist eine Halbschere 10 angeordnet, deren Oberarm 11 mit seinem einen Ende in einem an dem Schlitten 9 angeordneten Schultergelenk 12 gelagert ist. Das andere Ende des Oberarms ist über ein Gelenk 13 mit einem Unterarm 14 verbunden. Am freien Ende des Unterarms ist über ein weiteres Gelenk 15 ein Träger 16 für einen Prüfkopf 17 angeordnet. Die Gelenke 12, 13, 15 sind um Achsen drehbar, die zur Bahn des Schlittens 9 bzw. zur Achse des Rohrstutzens senkrecht stehen.

Vor Aufnahme der Prüfarbeiten wird in dem zu prüfenden Bereich des Behälters die Isolierung 5 mittels eines an dem Manipulator 7 angeordneten Schneid- oder Trennwerkzeugs ausgeschnitten. Wie Figur 2 zeigt, ist zum Ausschneiden der Isolierung am Träger 16 ein Werkzeug 18, beispielsweise ein Schleifgerät oder Schneidgerät 18a mit einem Antriebsmotor 18b angeordnet. Der Träger 16 für das Werkzeug 18 hat eine Halterung 16a mit Schnellverschlußglied 16b und ist über ein Gelenk 15 mit dem Unterarm 14 verbunden. Er kann mittels eines Antriebsmotors 15a mit Positionsgeber 15b über ein Getriebe gegenüber dem Unterarm 14 geschwenkt werden. Zum Verschieben des Schlittens 9, an dem über das Schultergelenk 12 die Halbschere angelenkt ist, dient ein Zahnstangenantrieb. Dieser Zahnstangenantrieb weist einen am Schlitten 9 angeordneten Antriebsmotor 9a mit Winkelgetriebe 9c und Ritzel 9d auf, das in eine am Wagen 8 befestigte Zahnstange 19 eingreift. Diese Zahnstange ist mit einem zahnlosen Führungsteil 19a zum Aufgleisen und Abziehen des Schlittens 9 versehen. Dadurch ist ein zeitsparender Montage-und Demontage-Vorgang des Manipulators möglich.

Zum Einstellen des Schwenkwinkels des Oberarms 11 (Figuren 8, 9) ist dem Schultergelenk 12 ein Antriebsmotor 12a zugeordnet, mit dem über ein Getriebe, insbesondere ein Kegelradgetriebe 12c, der Schwenkwinkel des Oberarms 11 einstellbar ist. In analoger Weise ist zum Einstellen des Schwenkwinkels des Unterarms dem Gelenk 13 zwischen Ober- und Unterarm ein Antriebsmotor 13a zugeordnet, der über ein Getriebe, insbesondere ein Kegelradgetriebe 13c, den Winkel zwischen Oberarm und Unterarm einzustellen gestattet.

Es ist günstig, wenn die Länge des Unterarms 14 kleiner ist als die des Oberarms 11, insbesondere für etwa 2/3 der Länge des Oberarms bemessen ist. Dadurch ist es möglich, auch bei beengten Raumverhältnissen die Arme an den Wagen 8 zu klappen und damit den Prüfkopf 17 in eine von außen zugängliche Position zu bringen. Dabei wird die Halbschere derart ausgebildet, daß der Unterarm 14 auf den Oberarm 11 zurückklappbar ist, und der Oberarm 11 flach auf den Wagen 8 legbar ist.

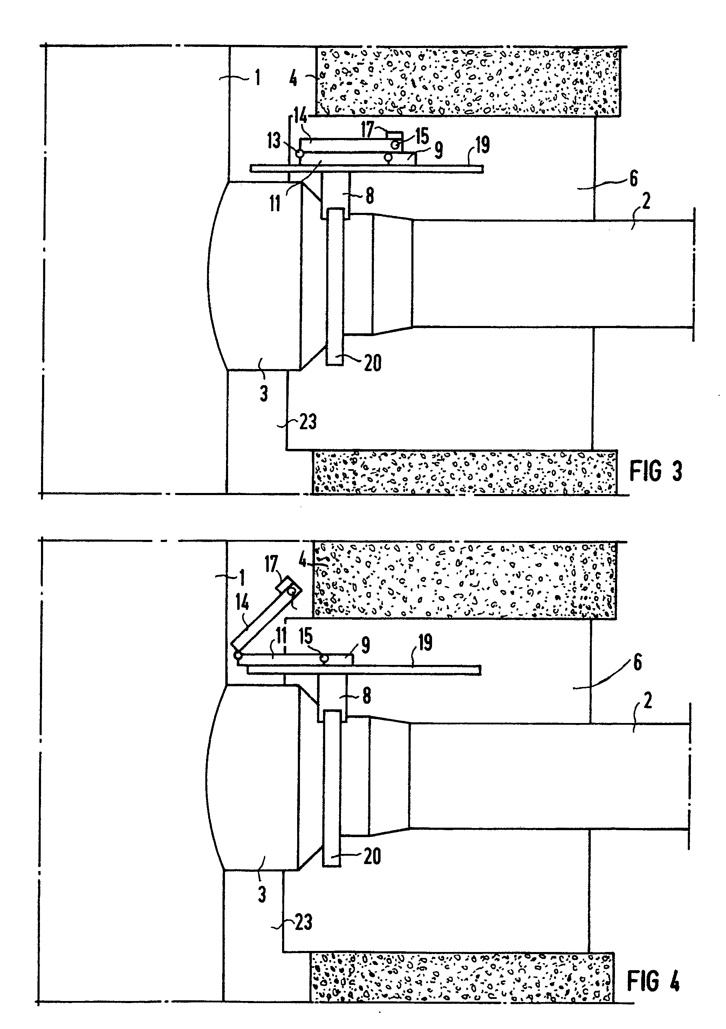

In Figur 3 ist die zusammengeklappte Stellung eines Manipulators in Prinzipdarstellung gezeigt. Der Oberarm 11 und der Unterarm 14 sind hier gleich lang gezeichnet, weil hier für den Manipulator genügend Raum zur Verfügung steht. In der dargestellten Lage ist der Manipulator durch die Öffnung 6 des biologischen Schildes 4 einführbar. Vor dem Einführen wird der Manipulator in an sich bekannter Weise auf einer hier nicht dargestellten Montageeinrichtung angebracht, die im wesentlichen aus geteilten, um die Rohrleitung 2 gelegten Halbschalen besteht, mit deren Hilfe der Manipulator in die Öffnung 6 eingeschoben wird.

Der Prüfkopf 17 ist dann, wie man aus der Figur 3 ersehen kann, von außen leicht zugänglich. Dadurch kann ein Austausch gegen einen anderen Prüfkopf oder ein Werkzeug in sehr kurzer Zeit vorgenommen und die Strahlenbelastung für das Bedienpersonal erheblich verkleinert werden.

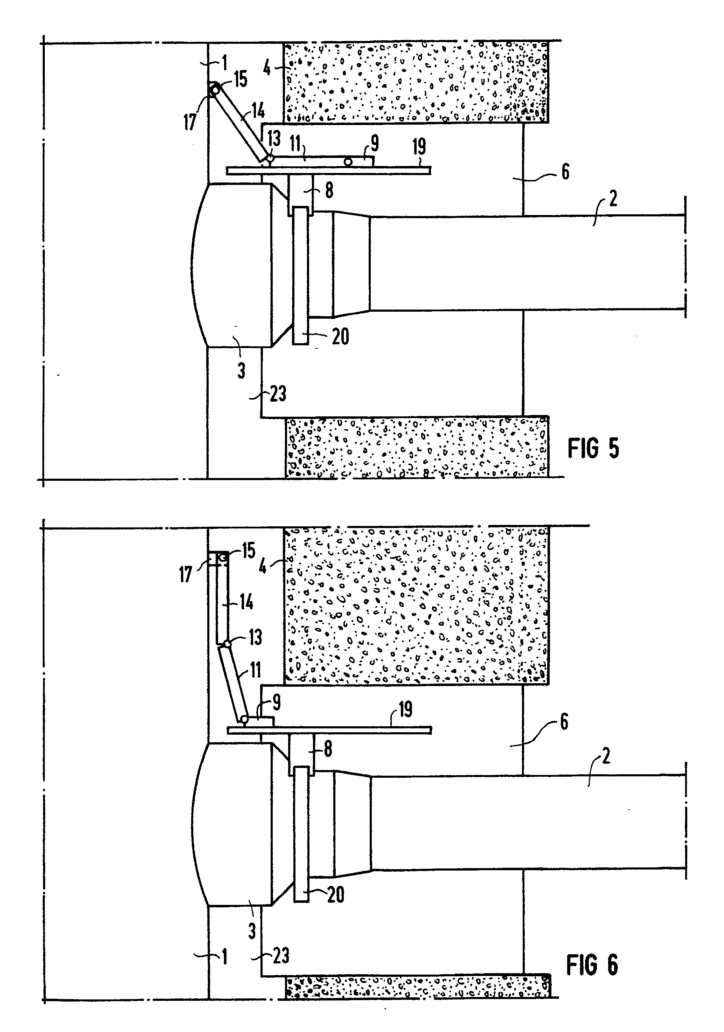

In einer um 45° gegen die Senkrechte geneigten Position ist genügend Raum, um den Unterarm hochzuklappen (Figur 4) und an die Wand des Behälters 1 anzuklappen (Figur 5).

Durch eine koordinierte Bewegung: Schwenken des Oberarms 11 und des Unterarms 14 sowie Verfahren des Schlittens 9 mit dem Gelenk 15 wird der Manipulator mit dem Prüfkopf in seine maximale Ausladung gefahren (Figur 6). Von hier aus kann der Prüfkopf in Umfangsrichtung des Stutzens 3 verfahren werden. Hierzu ist der Wagen 8 auf eine Ringschiene 20, die den Stutzen 3 koaxial umgibt, aufgegleist. Da die Prüfbahn nach einer Sattelkurve verläuft, wird während des Verfahrens des Wagens 8 in Umfangsrichtung der Schlitten 9 in Axialrichtung derart verschoben, daß der Träger 16 und das Gelenk 13 sich auf der vorgegebenen Bahn, insbesondere auf einer zumindest annähernd parallel zu der zu prüfenden Oberfläche verlaufenden Bahn, bewegen.

Als Antriebe für die Bewegungsabläufe dienen mit Positionsgebern 9b, 12b, 13b versehene elektrische Antriebsmotoren 9a, 12a, 13a, die von einer elektrischen Energieversorgungseinrichtung 21 gespeist werden (Figur 1). Zur Steuerung der Antriebsmotoren ist eine Steuereinrichtung 22 mit einem Rechner vorgesehen.

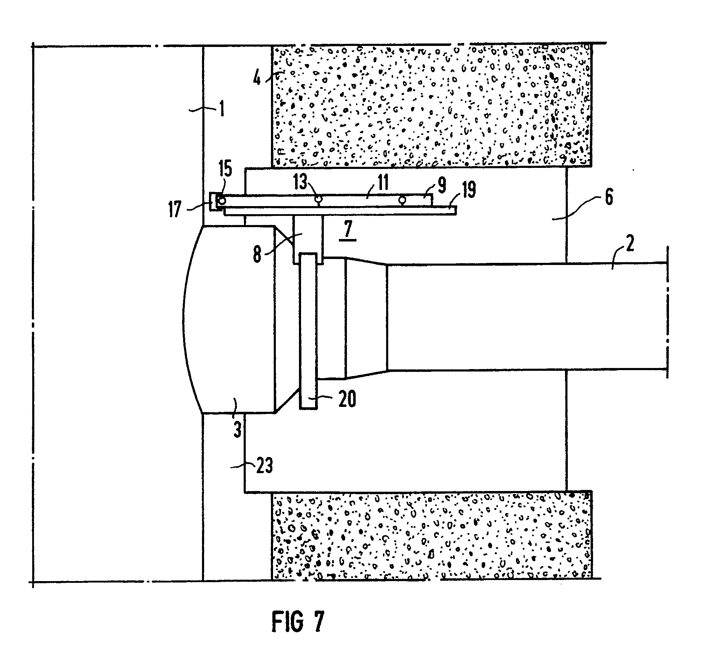

Figur 7 zeigt das Einbringen des Manipulators in gestreckter Lage der Arme 11, 14, bei welcher der Prüfkopf 17 dem Behälter 1 zugewandt ist. In dieser Lage kann der Manipulator auch dann eingefahren werden, wenn nur eine sehr kleine Öffnung im biologischen Schild und ein enger Ringspalt 23 vorhanden sind.

Den Figuren 8 und 9 ist in Seiten- und Stirnansicht eine praktische Ausführung eines Manipulators 7 für Hantierungsarbeiten zu entnehmen. Der Wagen 8 ist auf der Ringsschiene 20 mittels Rollenpaaren 20a, 20b gelagert und wird durch einen Elektromotor 24 mit Positionsgeber 24b angetrieben. Dieser Motor 24 wirkt über ein Ritzel 24a auf eine Zahnstange 20c.

Der Wagen 8 trägt eine Grundplatte 25, auf der parallel zur Achse des Stutzens 3 zwei Führungsschienen 26, 27 zur Führung des Schlittens 9 und eine Zahnstange 19 angeordnet sind. An dem Schlitten 9 sind Führungsrollen 28, 29 mit prismatischer Rille drehbar gelagert, welche in eine prismatische Erhebung der Führungsschienen eingreifen.

Der Zahnstange 19 ist ein Ritzel 9d zugeordnet, das von dem auf dem Schlitten 9 befestigten Motor 9a mit Positionsgeber 9b angetrieben wird.

Ein an der Spitze der Halbschere angeordneter Prüfkopf 17 hat eine Halterung 16a mit Schnellverschluß 16b und ist über das Gelenk 15 mit dem Unterarm 14 kardanisch aufgehängt.

## Patentansprüche

1. Manipulator für Hantierungsarbeiten, insbesondere für zerstörungsfreie Prüfungen, im Stutzenbereich eines Behälters des Primärkreises in einem Kernkraftwerk, bei dem an einem in Umfangsrichtung des Stutzens (3) verfahrbaren Wagen (8) ein in Achsrichtung des Stutzens (3) verschiebbarer Schlitten (9) und an diesem eine Halbschere (10) angeordnet ist, deren Oberarm (11) mit seinem einen Ende in einem am Schlitten (9) angeordneten Schultergelenk (12) gelagert ist und an dem anderen Ende über ein Gelenk (13) mit einem Unterarm (14) verbunden ist, an dessen freiem Ende über ein weiteres Gelenk (15) ein Träger (16) für ein Werkzeug (18) oder einen Prüfkopf (17) angeordnet ist.

2. Manipulator nach Anspruch 1, bei dem das Schultergelenk (12) an dem Schlitten (9) mittels eines Zahnstangenantriebs verschiebbar gelagert ist.

3. Manipulator nach Anspruch 2, bei dem der Zahnstangenantrieb eine an dem Wagen (8) angeordnete Zahnstange (19) hat, die mit einem zahnlosen Führungsteil (19a) zum Aufgleisen und Abziehen des Schlittens (9) versehen ist.

4. Manipulator nach Anspruch 1 oder 2, bei dem dem Schlitten (9), dem Schultergelenk (12) und/oder dem Gelenk (13) zwischen Ober- und Unterarm je ein Antriebsmotor (9a; 12a; 13a) mit Positionsgeber (9b; 12b; 13b) zugeordnet ist, mit dem über je ein Getriebe, insbesondere ein Kegelradgetriebe, die Position des Schlittens (9) und der Schwenkwinkel des Oberarms (11) bzw. des Unterarms (14) einstellbar sind, wobei den Antriebsmotoren (9a, 12a, 13a) eine mit den Positionsgebern (9b, 12b, 13b) verbundene Steuereinrichtung (22) zugeordnet ist.

5. Manipulator nach einem der vorhergehenden Ansprüche, bei dem der Unterarm (14) auf den Oberarm (11) zurückklappbar und der Oberarm (11) auf den Wagen (8) klappbar ist.

6. Manipulator nach einem der vorhergehenden Ansprüche, bei dem die Länge des Unterarmes (14) kleiner als die des Oberarmes (11), insbesondere für etwa 2/3 der Länge des Oberarmes (11), bemessen ist.

7.  Manipulator nach einem der vorhergehenden Ansprüche, bei dem der Wagen (8) auf eine konzentrisch zum Stutzen (3) des Behälters (1) angeordnete Ringschiene (20) aufgleisbar ist.

8.  Verfahren zum Hantieren eines Geräts, insbesondere eines Prüfkopfs, im Stutzenbereich eines Behälters des Primärkreises in einem Kernkraftwerk mit einem Manipulator, der einen in Umfangsrichtung des Stutzens verfahrbaren Wagen (8) und einen an diesem angeordneten, in Achsrichtung des Stutzens (3) verschiebbaren Schlitten (9) sowie eine an diesem gelagerte Halbschere (10) besitzt, deren Oberarm (11) mit seinem einen Ende in einem an dem Schlitten (9) angeordneten Schultergelenk (12) gelagert ist und an dem anderen Ende über ein Gelenk (13) mit einem Unterarm (14) verbunden ist, an dessen freiem Ende über ein weiteres Gelenk (15) ein Träger (16) für ein Werkzeug (18) oder einen Prüfkopf (17) angeordnet ist, insbesondere nach Anspruch 1, bei dem der Träger (16) für das Werkzeug (18) oder für den Prüfkopf (17) und das Gelenk (13) zwischen Oberarm (11) und Unterarm (14) mittels einer auf Antriebsmotoren (12a, 13a, 9a) wirkenden Steuereinrichtung (22) auf einer vorgegebenen Bahn gesteuert werden, wobei der Schwenkwinkel des Oberarms (11) und/oder des Unterarms (14) und gegebenenfalls die Position des Schlittens (9) mittels der Antriebsmotoren (12a, 13a, 9a) verändert werden.

9.  Verfahren nach Anspruch 8, bei dem das Gelenk (13) zwischen Oberarm (11) und Unterarm (14) auf einer Bahn zumindest annähernd parallel zu der zu prüfenden Oberfläche gesteuert wird.

10. Verfahren nach Anspruch 8, mit einem Manipulator, bei dem der Unterarm (14) auf den Oberarm (11) zurückklappbar und der Oberarm (11) auf den Wagen (8) klappbar ist und der Prüfkopf (17) bzw. das Werkzeug (18) in der auf den Schlitten (9) geklappten Lage ausgewechselt wird oder der Manipulator durch eine Öffnung (6) im biologischen Schild in einen Ringspalt (23) zwischen dem Behälter (1) und dem biologischen Schild (4) eingebracht bzw. durch die Öffnung (6) herausgenommen wird.

FIG 1

FIG 2

FIG 3

FIG 4

FIG 5

FIG 6

EP 0 451 527 A1

FIG 7

FIG 8

FIG 9

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 474 064   (AKISUKE NARUSE) <br> * Column 3, lines 1-47; figures 4-8; column 4, lines 17-32 * <br> – – – | 1,4-9 | G 21 C 17/007 <br> B 25 J 9/04 |
| Y | FR-A-2 626 807   (E.U.R.L. SEIROB) <br> * Page 2, lines 10-26; figures 2-4; page 4, line 37 - page 5, line 20 * <br> – – – | 1,4-9 | |
| A | DE-A-3 147 296   (M.A.N.) <br> * Page 7, last paragraph - page 8; figure 1 * <br> – – – | 1,4,7,8,10 | |
| A | FR-A-2 385 185   (WESTINGHOUSE) <br> * Page 4, lines 6-23; page 5, lines 4-22; figures 1-3 * <br> – – – – – | 1-3,8 | |

| | |
|---|---|
| | RECHERCHIERTE SACHGEBIETE (Int. Cl.5) |
| | G 21 C <br> B 25 J |

Der vorliegende Recherchenbericht wurde für alle Patentansprüche erstellt

| Recherchenort | Abschlußdatum der Recherche | Prüfer |
|---|---|---|
| Den Haag | 04 Juli 91 | JANDL F. |